# FASCICULE DE BREVET EUROPEEN

(11) **EP 3 160 724 B1**
(45) Date de publication et mention de la délivrance du brevet: **09.01.2019**
(21) Numéro de dépôt: 15729769.8
(22) Date de dépôt: 29.05.2015
(51) Int. Cl.: B29D 30/22, B29D 30/38, B29D 30/44, B29K 105/10

(54) **PROCÉDÉ ET INSTALLATION POUR L'ASSEMBLAGE D'UNE ÉBAUCHE DE PNEUMATIQUE**
VERFAHREN UND VORRICHTUNG ZUR HERSTELLUNG EINES REIFENROHLINGS
METHOD AND APPARATUS FOR ASSEMBLING A TIRE BLANK

(30) Priorité: 30.06.2014 FR 1456169
(43) Date de publication de la demande: 03.05.2017
(73) Titulaire: Compagnie Générale des Etablissements Michelin, 63000 Clermont-Ferrand (FR)
(72) Inventeur: HINC, Henri, F-63040 Clermont-Ferrand Cedex 9 (FR); DRUET, Michel, F-63040 Clermont-Ferrand Cedex 9 (FR); DEBOEUF, Michel, F-63040 Clermont-Ferrand Cedex 9 (FR); JAUNET, Nicolas, F-63040 Clermont-Ferrand Cedex 9 (FR); DETTORRE, Jean-Marie, F-63040 Clermont-Ferrand Cedex 9 (FR)
(74) Mandataire: Noel, Luminita
(86) Numéro de dépôt international: PCT/EP2015/062027
(87) Numéro de publication internationale: WO 2016/000880

(56) Documents cités:
- DE-A1- 19 901 958
- US-A- 5 009 732
- US-A- 5 115 659
- US-A- 5 174 939
- US-A1- 2009 084 489
- US-A1- 2011 079 343
- US-A1- 2011 167 888

## Description

L'invention concerne le domaine de la fabrication des pneumatiques pour véhicules de tourisme ou utilitaires et s'intéresse plus particulièrement aux procédés d'assemblage permettant de poser successivement l'ensemble des constituants d'un tel pneumatique sans variation sensible du diamètre de pose.

Dans ce type de procédés, l'ensemble des opérations d'assemblage de l'ébauche de pneumatique sont réalisées sur un tambour dont le diamètre correspond de préférence sensiblement au diamètre intérieur du pneumatique (couramment appelé « diamètre au seat » en référence au diamètre normalisé de la jante sur laquelle le pneumatique sera monté lors de son utilisation). Ainsi, non seulement la carcasse, les bourrelets et les flancs, mais aussi les renforts de sommet et la bande de roulement peuvent être posés sur un tambour d'assemblage dont le diamètre correspond sensiblement au diamètre du seat. Un avantage de ce type de procédés est qu'il peut permettre de conserver l'ébauche du pneumatique sur le même tambour tout au long de son assemblage. L'ébauche complète peut ensuite être directement introduite dans un moule de vulcanisation où elle prend son diamètre extérieur final par l'action d'une pression interne. Un exemple de ce type de procédé est donné dans le document FR1508652.

On appelle conformation la transformation que subit l'ébauche de pneumatique lorsqu'elle passe de sa forme sensiblement tubulaire à la forme généralement toroïdale d'un pneumatique fini. Lors de la conformation, la partie centrale de l'ébauche qui correspond au sommet du pneumatique voit son diamètre augmenter par l'action d'une pression interne alors que les bourrelets sont maintenus au diamètre initial. La différence de circonférence entre le diamètre au seat et le diamètre conformé est généralement comprise entre 30% et 70% et par exemple couramment de l'ordre de 50% pour un pneumatique pour véhicule de tourisme.

Une limite de ces procédés provient du fait que l'armature de sommet des pneumatiques pour véhicules de tourisme ou utilitaires comportent de manière pratiquement systématique des renforts circonférentiels de frettage, souvent appelés « renforts à 0° ». La fonction de ces renforts à 0° est de brider fermement l'expansion circonférentielle du pneumatique lors de son utilisation, notamment à haute vitesse. On parle de renforts à 0° même lorsqu'ils sont posés par enroulement hélicoïdal et donc avec un très léger angle d'hélice. On néglige généralement cet angle d'hélice et l'on considère que l'effet des renforts de frettage est le même que s'ils étaient disposés dans un plan strictement parallèle au plan équatorial du pneumatique. On comprend que s'ils étaient posés sur l'ébauche avant sa conformation, ces renforts à 0° empêcheraient la conformation.

Des solutions à cette impossibilité sont proposées par exemple dans les documents US4050973 ou US4094354.

Le document US4050973 propose que les renforts à 0° soient préparés et posés sur l'ébauche de pneumatique sous une forme ondulée obtenue par tricotage de renforts à 0° avec des fils plus courts mais fragiles, ces fils étant rompus lors de la conformation. Un problème de ce procédé est manifestement la complexité et la lenteur de la préparation du tricot. Un autre problème est le fait d'avoir recours à des fils supplémentaires qui sont inutiles dans le produit final et qui peuvent en outre être nuisibles.

Le document US4094354 propose que les renforts à 0° soient préparés sous la forme d'une double bandelette de caoutchouc comprenant d'une part des renforts à 0° ondulés et d'autre part des fils tendus mais fragiles et destinés à être rompus lors de la conformation. Un problème de ce procédé est manifestement la complexité de la préparation de la double bandelette ainsi que le fait d'introduire des fils inutiles voire nuisibles dans le produit final.

Ainsi, malgré ces propositions, l'industrie du pneumatique n'a pas adopté ce type de procédé d'assemblage de l'ensemble de l'ébauche au diamètre du seat pour la fabrication des pneumatiques comportant des renforts de sommet à 0° et en particulier pour la fabrication des pneumatiques radiaux modernes.

L'invention a donc pour objectif de pallier l'un au moins des inconvénients décrits ci-dessus.

L'invention propose pour cela un procédé et une installation permettant la préparation et la pose au sein de l'ébauche de pneumatique d'une bandelette comprenant des renforts longitudinaux, ladite bandelette étant posée sous forme ondulée de sorte que la longueur des renforts longitudinaux est très sensiblement supérieure à la longueur de pose. On parle de « sur-longueur » pour désigner la différence entre la longueur de bandelette effectivement posée et la longueur parcourue sur la surface de pose.

Dans la présente demande, le terme « bandelette de renforcement » ou «bandelette» désigne une étroite bande de caoutchouc incluant des renforts longitudinaux et destinée à être posée par enroulement hélicoïdal au sein de l'ébauche d'un pneumatique. Les renforts peuvent par exemple être des câbles ou des monofilaments, en acier, en matériau minéral (fibre de verre ou de carbone), en fibre synthétique ou en matériau textile de manière connue en soi dans le domaine du pneumatique. Une bandelette comprend une pluralité de renforts, par exemple entre 3 et 10 renforts. Une telle bandelette a une largeur maximale de l'ordre de 15 à 20 mm selon la largeur totale de l'armature de frettage. De préférence encore, pour l'armature de frettage d'un pneumatique pour véhicule de tourisme, la bandelette a une largeur maximale de 11 mm. L'enroulement comprend une pluralité de tours, par exemple entre 10 et 30 tours pour constituer une armature de frettage complète.

L'invention propose donc une installation pour la fabrication d'un pneumatique, ladite installation comprenant un tambour rotatif autour d'un axe de tambour, ledit tambour étant apte à supporter une ébauche de pneumatique, ledit tambour étant placé en regard d'un dispositif apte à :
- transformer en continu une bandelette de renforcement plate en une bandelette de renforcement ondulée,
- presser un à un les sommets des ondes de la bandelette ondulée sur la surface de l'ébauche de pneumatique entrainée en rotation par le tambour.

Le dispositif comprend :
- un transporteur continu apte à guider une pluralité de doigts le long d'un circuit fermé, lesdits doigts étant aptes à prendre appui sur une première face de la bandelette,
- une platine rotative selon un axe de platine, ladite platine rotative portant une pluralité de galets rotatifs d'axes parallèles à l'axe de platine, lesdits galets étant répartis sur un cercle sensiblement concentrique à l'axe de platine, lesdits galets étant aptes à prendre appui sur une deuxième face de la bandelette,
- des moyens de guidage de la bandelette de renforcement plate entrant dans le dispositif,
- des moyens de synchronisation de la rotation de la platine rotative et de l'avancement du transporteur continu,
le circuit fermé comportant une portion d'interférence dans laquelle les moyens de synchronisation permettent aux doigts et aux galets de se déplacer selon des mouvements de rotation dans un plan commun perpendiculaire à l'axe de platine, les doigts et les galets étant intercalés dans ladite portion d'interférence de manière à imposer à la bandelette des ondes s'étendant dans ledit plan commun.

De préférence encore, le transporteur continu est une chaîne guidée par un pignon d'interférence dans la portion d'interférence du circuit fermé.

De préférence encore, les doigts sont portés par les axes des maillons de la chaîne.

De préférence encore, le dispositif comprend en outre un dérive-bandelette statique positionné dans la portion d'interférence pour pouvoir dériver la bandelette des doigts, de préférence au moins un quart de tour après le début de la portion d'interférence.

De préférence encore, le dispositif comprend en outre des moyens de rouletage de la bandelette ondulée.

De préférence encore, le dispositif comprend en outre un cabestan motorisé apte à contrôler son alimentation en bandelette plate.

L'invention propose également un procédé de fabrication d'un pneumatique réalisé par une telle installation, ledit procédé comprenant successivement des étapes consistant à :
- transformer en continu une bandelette de renforcement plate (20) en une bandelette de renforcement ondulée (21),
- presser un à un les sommets (211) des ondes de la bandelette ondulée sur la surface (501) d'une ébauche de pneumatique (50) entrainée en rotation par un tambour (3) autour d'un axe de tambour (32),
- enrouler la bandelette ondulée sur l'ébauche de pneumatique,
dans lequel la bandelette de renforcement plate est transformée en bandelette ondulée à proximité immédiate du tambour, les ondes de la bandelette ondulée et le mouvement d'approche des sommets des ondes vers la surface de l'ébauche s'étendent dans un plan sensiblement perpendiculaire à l'axe de tambour.

De préférence, on enroule la bandelette ondulée en hélice sur l'ébauche de pneumatique afin de constituer en une pluralité de tours une armature de frettage du sommet du pneumatique, la bandelette ondulée présentant une sur-longueur donnée permettant la conformation de l'ébauche.

De préférence encore, le procédé comprend en outre une étape de rouletage consistant à rabattre en continu les ondes de la bandelette ondulée au cours de l'enroulement de la bandelette sur l'ébauche, le mouvement de rabattage des ondes vers la surface de l'ébauche s'effectuant dans un plan sensiblement perpendiculaire à l'axe de tambour.

De préférence encore, on fait varier la hauteur des ondes au cours de l'enroulement.

La description qui suit permet de mieux comprendre le procédé selon l'invention ainsi que la structure et le fonctionnement d'une installation selon des modes préférés de réalisation de l'invention et s'appuie sur les figures 1 à 10 dans lesquelles :
- la figure 1 est une vue schématique représentant le principe du procédé de l'invention et un premier mode de réalisation d'une installation selon l'invention au cours de son utilisation,
- la figure 2 est une vue schématique en perspective du dispositif de la figure 1,
- la figure 3 est une vue en détail du fonctionnement du dispositif de la figure 1,
- la figure 4 est une vue en coupe d'un exemple de réalisation du support des doigts du dispositif de la figure 1,
- la figure 5 est une vue en coupe d'un exemple de réalisation du support des galets sur la platine rotative du dispositif de la figure 1,
- les figures 6 et 7 sont des vues schématiques en perspective montrant deux exemples similaires d'ébauche de pneumatique obtenu par le procédé de l'invention,
- les figures 8 et 9 illustrent en perspective et en vue de dessus un mode de réalisation préféré du dispositif de la figure 1.
- la figure 10 est une vue schématique représentant le procédé de l'invention mis en oeuvre sur un deuxième mode de réalisation d'une installation selon l'invention.

Sur les différentes figures, les éléments identiques ou similaires portent les mêmes références. La description de la structure et de la fonction de ces éléments identiques ou similaires n'est donc pas systématiquement reprise.

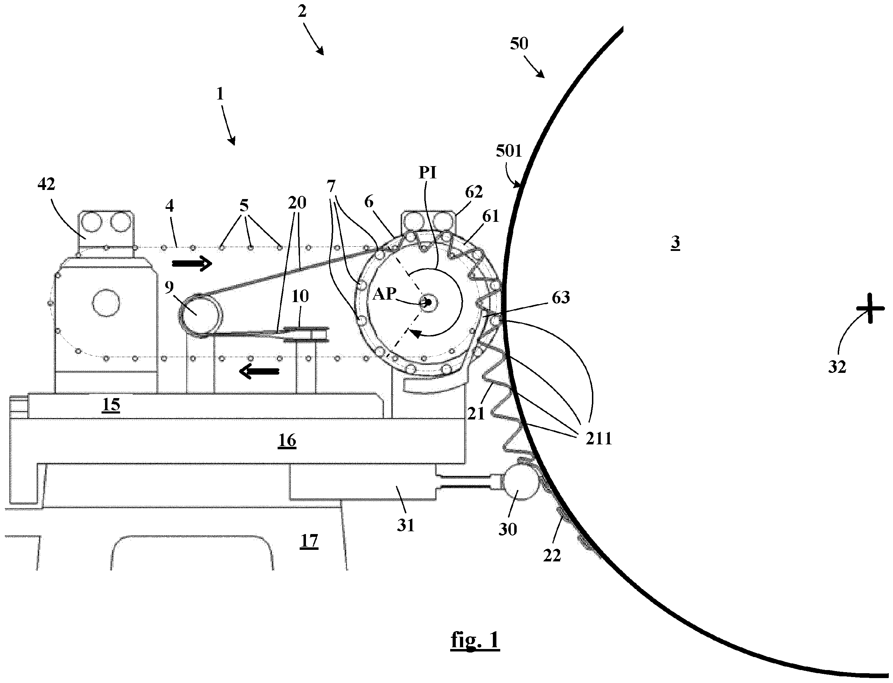

Sur la figure 1, on voit les principes essentiels du procédé et de l'installation selon l'invention.

Le procédé de l'invention est un procédé essentiellement continu qui consiste tout d'abord à transformer une bandelette de renforcement plate 20 en une bandelette ondulée 21 puis à la poser sous forme ondulée sur une ébauche de pneumatique 50. Ces deux étapes se déroulent successivement et de préférence à proximité immédiate l'une de l'autre. Progressivement, on réalise un enroulement de plusieurs tours de cette bandelette ondulée sur l'ébauche. Les ondes de la bandelette ondulée 21 ainsi que le mouvement d'approche vers la surface de l'ébauche s'étendent dans un plan perpendiculaire à l'axe de l'ébauche de pneumatique, c'est à dire un plan perpendiculaire à l'axe 32 du tambour 3 qui supporte et contrôle la rotation de l'ébauche 50. On comprend que l'enroulement est réalisé en hélice de manière connue en soi afin de confectionner une armature de frettage sur une largeur donnée, cette largeur étant définie le plus souvent par rapport à la largeur prévue de la bande de roulement du pneumatique.

De préférence, le procédé comprend en outre et comme représenté ici une étape de rouletage consistant à transformer la bandelette ondulée 21 en une bandelette ondulée rouletée 22, c'est à dire une bandelette dont les ondes ont été rabattues sur l'ébauche après y avoir été posées. On voit bien sur cette figure que la longueur de la bandelette posée sur l'ébauche (et donc la longueur des renforts longitudinaux qu'elle contient) et très sensiblement supérieure à la longueur de pose parcourue sur la surface de l'ébauche 50.

Le procédé de l'invention n'implique donc pas de stockage ni de gestion d'un produit semi-fini intermédiaire. La bandelette ondulée est au contraire enroulée directement au sein de l'ébauche dès que l'étape qui lui confère sa forme ondulée a été réalisée.

Afin de donner à l'ensemble de l'enroulement une rigidité homogène, il peut être préférable d'enrouler le premier et le dernier tour de bandelette sans déplacement axial et donc sur lui-même. De même, pour obtenir une densité de renfort suffisante, il peut être préférable d'enrouler successivement une pluralité de couches d'armature de frettage selon le principe de l'invention.

L'installation 2 permet de mettre en oeuvre ce procédé. Elle comprend le tambour d'assemblage 3 et un dispositif de préparation et de pose de la bandelette. Ce dispositif 1 permet dans un premier temps la transformation in situ d'une bandelette de renforcement plate 20 en une bandelette ondulée 21 et dans un deuxième temps la pose de la bandelette sous forme ondulée sur une ébauche de pneumatique 50. De préférence, le dispositif permet dans un troisième temps de transformer la bandelette ondulée 21 en une bandelette ondulée rouletée 22, c'est à dire une bandelette dont les ondes ont été rabattues sur la surface 31 de l'ébauche 50.

Pour ce faire, le dispositif 1 comprend un circuit fermé le long duquel circulent des doigts 5 selon le sens indiqué sur la figure par les flèches. Les doigts sont guidés le long du circuit par un transporteur continu indexé 4 comme par exemple une chaîne ou une courroie crantée. Le transporteur continu est animé ici par un motoréducteur de transporteur 42. Une platine rotative 6 porte des galets 7 répartis à sa périphérie sur un cercle 61 concentrique à l'axe de rotation AP de la platine rotative. La rotation de la platine est contrôlée par un motoréducteur de platine 62.

Des moyens de synchronisation permettent de contrôler la vitesse des deux motoréducteurs de manière à ce que le déplacement des doigts 5 le long du circuit soit coordonné avec le déplacement des galets 7 de la platine, en particulier dans une portion d'interférence PI dans laquelle les doigts et les galets peuvent ainsi se déplacer dans un plan commun perpendiculaire à l'axe de platine AP et à l'axe du tambour 32. Les doigts 5 prennent appui sur la face supérieure de la bandelette alors que les galets 7 prennent appui sur la face inférieure de la bandelette. Lors du fonctionnement du dispositif, on comprend que les galets de la platine viennent s'intercaler entre les doigts et forcent progressivement la bandelette à prendre une forme ondulée 21.

Le dispositif 1 est placé face à l'ébauche de pneumatique 50 portée par le tambour rotatif d'assemblage 3 de manière à ce que les galets de la platine rotative viennent l'un après l'autre s'approcher de la surface 501 de l'ébauche. Le fonctionnement du dispositif décrit ci-dessus est synchronisé avec la rotation du tambour. Les sommets 211 des ondes de la bande ondulée 21 peuvent alors venir en contact et être pressés un à un contre la surface de l'ébauche 501. La bandelette en caoutchouc peut ainsi adhérer ponctuellement à la surface en mouvement de l'ébauche et être ensuite entraînée par celle-ci.

Le dispositif 1 comprend de préférence un dérive-bandelette fixe 63 dont la fonction est de faire échapper axialement la bandelette 21 des doigts une fois que la bandelette ondulée est liée à l'ébauche. La bandelette est alors entrainée par l'ébauche et s'y enroule tout en échappant au contrôle des doigts et des galets du dispositif. Le dérive-bandelette agit dans la portion d'interférence PI, de préférence au moins un quart de tour après le début de celle-ci.

De préférence encore, des moyens de rouletage 30 permettent de rabattre les ondes de la bandelette ondulée 21 en les plaquant contre la surface de l'ébauche. La bandelette ondulée rouletée 22 est ainsi encore mieux fixée quant à sa position et quant à l'orientation longitudinale de ses renforts ce qui permet d'assurer la meilleure répartition de la sur-longueur des renforts sur la circonférence de l'ébauche.

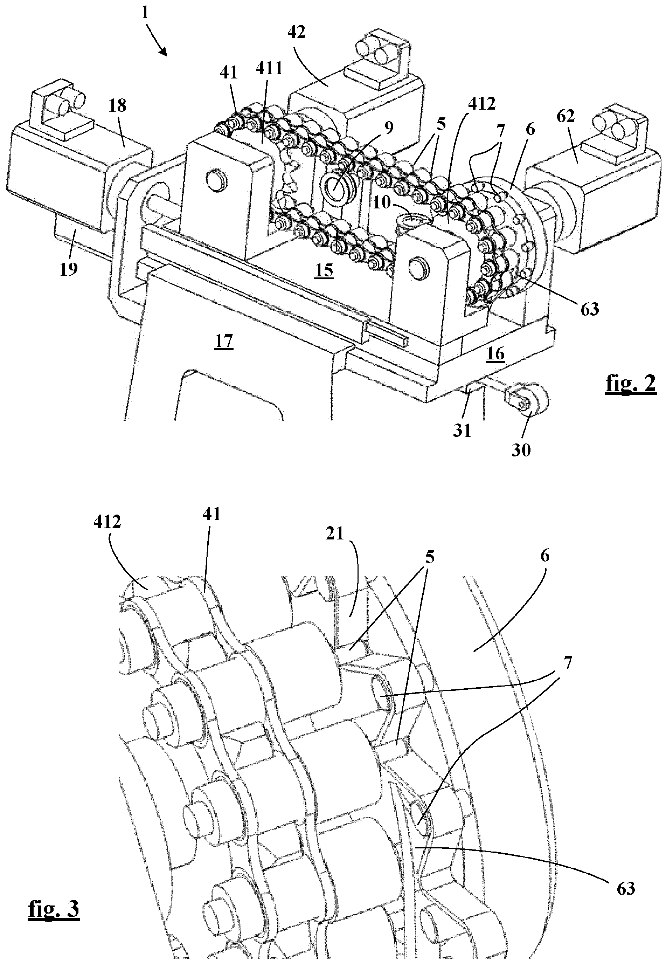

La figure 2 en perspective permet de mieux visualiser les éléments constitutifs de ce mode de réalisation préféré de l'installation. En particulier, si l'on compare les figures 1 et 2, on voit bien le principe des moyens qui assurent le guidage de la bandelette plate entrant dans le dispositif. Une poulie de guidage 9 placée dans le plan et à l'intérieur du circuit fermé 4 guide la bandelette plate vers la portion d'interférence PI des doigts et des galets. La poulie de guidage 9 reçoit la bandelette d'une poulie d'alimentation 10 également placée dans le plan du circuit des doigts mais orientée de manière à recevoir la bandelette depuis l'extérieur, par exemple depuis l'arrière de la figure 1 dans ce mode de réalisation. On voit aussi que la bandelette 20 est vrillée d'environ un quart de tour entre les deux poulies.

Sur la figure 2 on voit également bien le principe d'entrainement des doigts 5 par le transporteur continu 4, ici sous la forme d'une chaîne 41. La chaîne 41 circule autour de deux pignons 411 et 412. Le pignon moteur 411 est entrainé par le moteur de transporteur 42. Le pignon d'interférence 412 est entrainé en rotation par la chaîne et a pour seule fonction de guider la chaîne et donc de guider les doigts 5 en regard des galets 7 de la platine 6. Comme discuté plus haut, le déplacement de la chaîne doit se faire en parfaite synchronisation avec la rotation de la platine 6 portant les galets 7. Cette synchronisation est garantie par les moyens de synchronisation, par exemple par un contrôle commun des deux moteurs électriques 42 et 62. Alternativement, le pignon d'interférence 412 peut être entrainé en rotation par le même moteur que la platine rotative. Du fait que le pignon 412 n'est pas nécessairement coaxial avec l'axe de platine, l'entrainement peut de préférence se faire par l'intermédiaire d'un joint d'Oldham ou d'un arbre équipé de joints homocinétiques.

Sur la figure 2, on voit également qu'une embase 16 mobile par rapport à un bâti 17 permet de contrôler la position de l'ensemble des éléments du dispositif relativement au tambour et donc à l'ébauche et permet également de contrôler la pression avec laquelle la bandelette ondulée 21 est appliquée par les galets sur la surface de l'ébauche. Les moyens de rouletage, ici sous la forme d'un rouleau presseur 30, sont également portées par l'embase mobile 16, par exemple par l'intermédiaire d'un vérin pneumatique 31 (voir aussi figure 1) leur imprimant une force d'appui élastique. La position de l'embase mobile 16 est ici contrôlée par un vérin électrique 19.

Un coulisseau 15 lui-même mobile par rapport à l'embase 16 supporte les deux pignons 411 et 412 du transporteur continu. On comprend qu'en déplaçant légèrement ce coulisseau par rapport au support de la platine rotative (et donc par rapport à l'axe de platine AP), on peut faire varier la hauteur des ondes imposées à la bandelette. De cette manière on peut faire varier précisément la sur-longueur donnée à la bandelette ondulée. Le déplacement du coulisseau 15 est ici contrôlé par un vérin électrique de coulisseau 18. Afin de donner une indication d'ordre de grandeur, on peut dire qu'une sur-longueur de 50% est obtenue lorsque les ondes ont une hauteur (amplitude) d'environ 11 mm.

La figure 3 montre à une plus grande échelle le principe de ce mode de réalisation concernant la formation des ondes par la coopération des doigts 5 et des galets 7 dans la portion d'interférence. On y voit également bien le principe du dérive-bandelette 63 (sous la forme d'une came statique) qui a pour fonction de dévier la bandelette pour la faire échapper du doigt 5 après qu'elle a été pressée contre l'ébauche (non représentée ici). Pour cela, le dérive-bandelette comprend un plan incliné le long duquel glisse le bord de la bandelette ondulé 21. On comprend qu'à ce stade du procédé, la bandelette est déjà associée à l'ébauche.

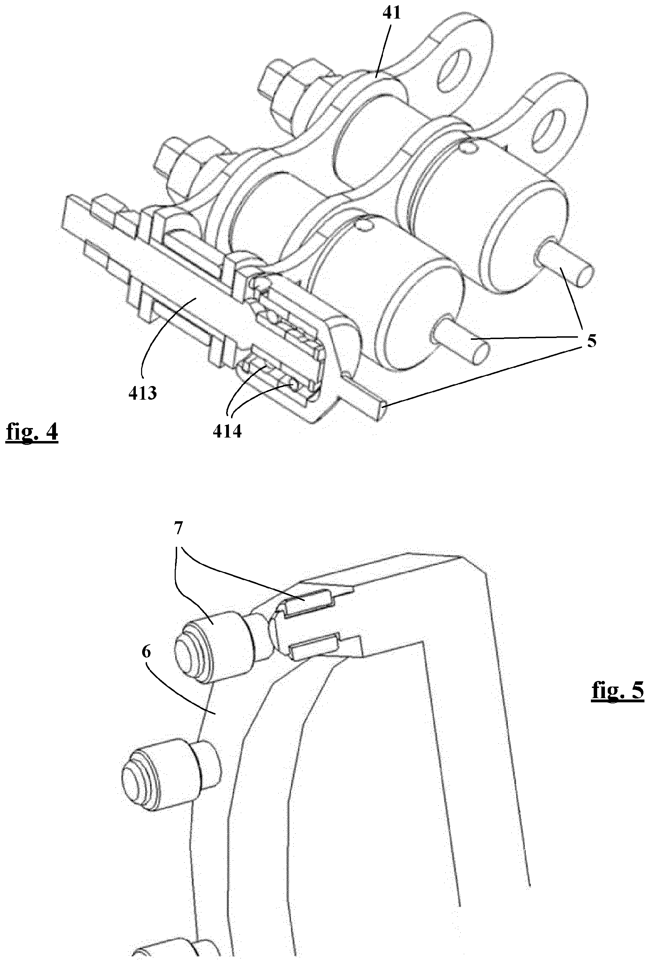

La figure 4 montre à plus grande échelle encore un détail de ce mode de réalisation du dispositif et particulièrement d'un mode de réalisation du transporteur continu et des doigts. Les axes 413 des maillons de la chaine 41 supportent les doigts 5 montés à rotation sur lesdits axes par l'intermédiaire de roulements à billes 414. Les doigts 5 sont donc libres de tourner par rapport à leurs supports afin de permettre à la bandelette de circuler pour former ses ondes en imposant le moins d'efforts possible au dispositif (et à la bandelette elle-même).

La figure 5 montre à grande échelle un détail de ce mode de réalisation de l'invention et particulièrement des galets 7 portés par la platine rotative 6. Les galets sont montés à rotation sur la platine par l'intermédiaire de paliers (par exemple des paliers lisses). Comme les doigts, les galets sont libres de tourner par rapport à leurs supports afin de permettre à la bandelette de circuler pour former ses ondes en imposant le moins d'efforts possible au dispositif (et à la bandelette elle-même).

L'installation permet donc de mettre en oeuvre le procédé selon l'invention consistant à préparer une bandelette ondulée comportant une sur-longueur contrôlée, la bandelette ondulée étant ensuite enroulée sous sa forme ondulée directement sur l'ébauche d'un pneumatique au cours de sa confection. La pose directe sur l'ébauche permet de garantir la précision de la pose en particulier en ce qui concerne la valeur de la sur-longueur des renforts et la répartition régulière de cette sur-longueur sur la circonférence de l'ébauche. On enroule donc en hélice un nombre adapté de tours de la bandelette ondulée afin de constituer l'armature de frettage du pneumatique. Cet enroulement peut se faire au diamètre du seat comme décrit plus haut en préambule de la demande puisque la sur-longueur des renforts de la bandelette ondulée autorise ensuite l'ébauche à être conformée, c'est à dire à prendre la forme pratiquement finale d'un pneumatique, avant que lesdits renforts à 0° soient réellement mis en tension.

Au cours de l'enroulement en hélice autour de l'ébauche, on peut en outre faire varier la valeur de la sur-longueur de la bandelette grâce au contrôle de la position du coulisseau 15. On peut par exemple prévoir que la sur-longueur soit plus importante au centre qu'aux épaules de la bande de roulement de sorte qu'un certain galbe est donné au pneumatique lors de la conformation de l'ébauche complète.

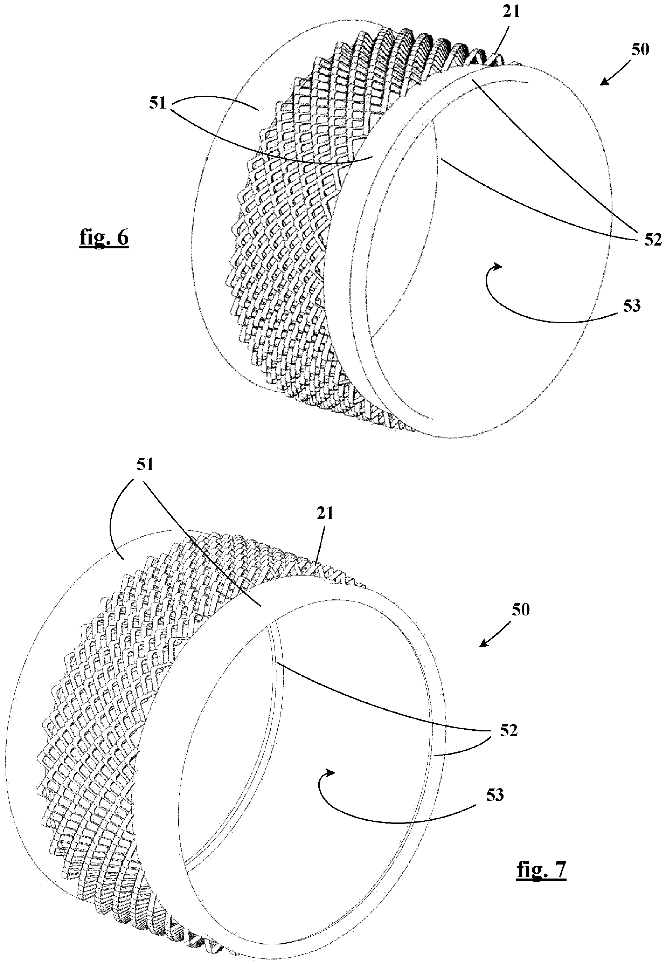

A la figure 6, on a représenté schématiquement un exemple d'ébauche de pneumatique 50 obtenue selon l'invention. On a voulu en particulier montrer ici l'armature de frettage disposée au sein d'une ébauche au cours de la fabrication d'un pneumatique. Le tambour sur lequel a été assemblé l'ébauche jusqu'à ce stade n'est pas représenté. On reconnaît les renforts à 0° disposés sous la forme d'une bandelette ondulée 21 telle que formée par le procédé de l'invention. Les ondes de la bandelette s'étendent dans un plan perpendiculaire à l'axe de l'ébauche (en négligeant l'angle d'hélice de l'enroulement comme discuté plus haut). Les ondes de la bandelette sont donc dans un plan parallèle au plan équatorial du pneumatique qui sera obtenu à partir de cette ébauche. Une quinzaine de tours ont été enroulés autour de l'ébauche afin de constituer l'armature de frettage complète.

On voit également la couche 51 contenant les renforts de carcasse et les bourrelets 52 contenant les renforts de bourrelets (souvent appelés « tringles »). Des nappes de renforts de sommet peuvent être placées sous l'armature de frettage. Une couche de gomme d'étanchéité 53 est de préférence présente à l'intérieur de la carcasse 51. Les bandelettes de renforts à 0° sont représentées ici sous la forme ondulée 21 mais non rouletée (référencée 22 sur les figures précédentes) afin de faciliter la lecture du dessin. On comprend que la forme rouletée peut être préférée pour améliorer la précision du positionnement des renforts dans la suite du procédé comme décrit plus haut. Une bande de roulement et des gommes de protection des flancs peuvent ensuite être ajoutées à cette ébauche de manière connue en soi. Tous les constituants du futur pneumatique peuvent ainsi être posés au même diamètre réduit, c'est à dire sur un même tambour au diamètre du seat et donc sans conformation intermédiaire.

Alternativement, le tambour de pose peut également avoir un diamètre légèrement supérieur au diamètre du seat s'il comprend des gorges pour recevoir les bourrelets de l'ébauche. On obtient alors plutôt une ébauche telle que représentée à la figure 7.

Dans un cas comme dans l'autre, une fois posés tous les éléments constitutifs d'un pneumatique, l'ébauche complète ainsi constituée peut alors être placée dans une presse de vulcanisation, conformée puis moulée et vulcanisée de manière connue en soi.

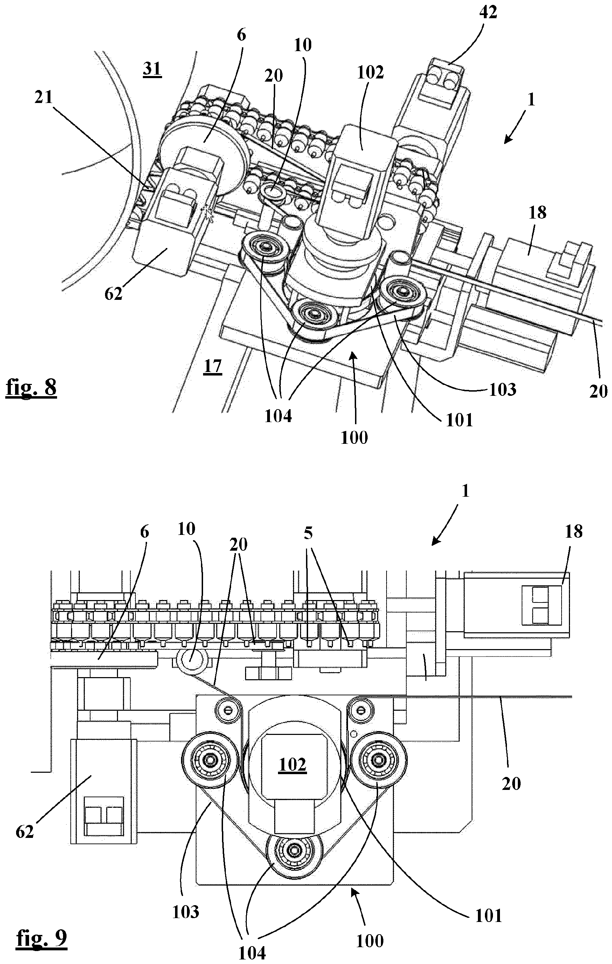

De préférence, l'alimentation du dispositif en bandelette plate fait l'objet d'un contrôle précis de son débit. Ceci peut être obtenu grâce à l'utilisation d'un cabestan motorisé 100 comme représenté aux figures 8 et 9. Sur ces figures, on voit la bandelette plate 20 être guidée autour de la poulie 101 du cabestan, la rotation de cette poulie étant contrôlée par le moteur de cabestan 102. De préférence encore, une sangle 103 tendue entre des renvois 104 vient plaquer la bandelette sur la poulie de cabestan afin de lui interdire tout glissement intempestif. La vitesse de rotation du cabestan, c'est à dire la vitesse de la bandelette plate alimentant le dispositif, peut être contrôlée précisément en fonction de la vitesse de rotation de l'ébauche afin de contrôler tout aussi précisément la sur-longueur des renforts posés, y compris de manière dynamique au cours de l'enroulement en hélice de la bandelette ondulée comme décrit plus haut.

Afin de s'adapter aux variations de longueurs délivrées par le cabestan, le décalage entre l'axe de platine AP et l'axe du pignon d'interférence peut s'adapter passivement au moyen par exemple d'un simple ressort tendant à reculer le coulisseau 15 ou activement par l'intermédiaire d'une gestion basée sur un mesure de la tension effective de la bandelette.

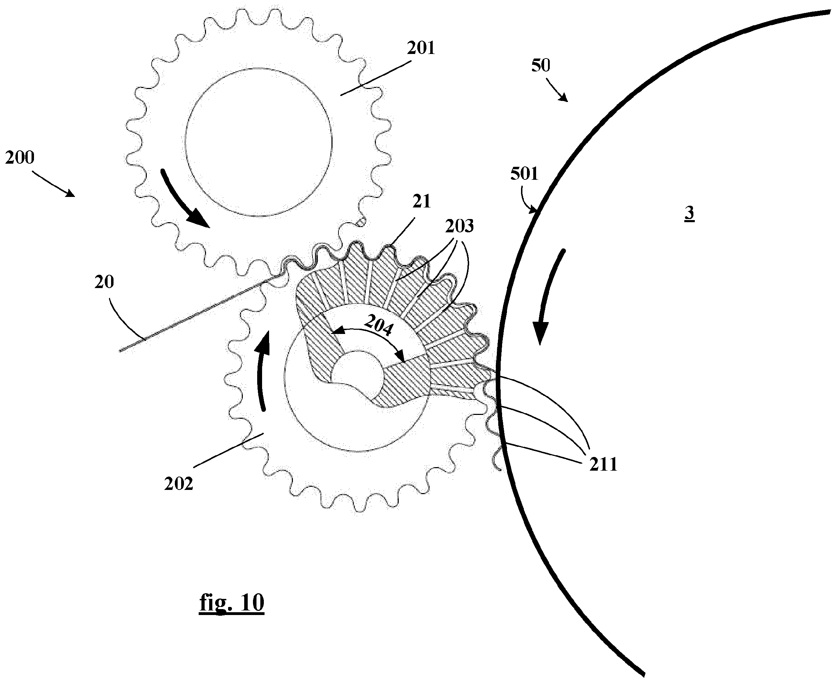

A la figure 10, on a représenté un autre mode de réalisation du dispositif de préparation et de pose de la bandelette. Ce dispositif 200 comprend 2 pignons 201 et 202 dont les dents engrènent et coopèrent pour déformer la bandelette plate 20 et la transformer en bandelette ondulée 21. De préférence, la bandelette est maintenue plaquée au fond des dents par une dépression régnant dans les canaux 203. Ces canaux sont en dépression tant qu'ils sont en communication avec le secteur fixe 204 lui-même connecté à une source de vide. Les sommets 211 des ondes de la bandelette sont pressés un a un par les dents du pignon 202 contre la surface 501 de l'ébauche 50 d'une manière comparable à ce qui a été décrit avec le dispositif des figures précédentes. Une fois les sommets entrainés par l'ébauche, la dépression peut même être remplacée par une légère pression afin d'aider la bandelette à quitter le fond des dents.

## Revendications

1. Installation (2) pour la fabrication d'un pneumatique, ladite installation comprenant un tambour rotatif (3) autour d'un axe de tambour (32), ledit tambour étant apte à supporter une ébauche de pneumatique, ledit tambour étant placé en regard d'un dispositif (1) apte à :
- transformer en continu une bandelette de renforcement plate (20) en une bandelette de renforcement ondulée (21),
- presser un à un les sommets des ondes de la bandelette ondulée sur la surface de l'ébauche de pneumatique (3) entrainée en rotation par le tambour,
l'installation étant **caractérisée en ce que** le dispositif (1) comprend :
- un transporteur continu (4) apte à guider une pluralité de doigts (5) le long d'un circuit fermé, lesdits doigts étant aptes à prendre appui sur une première face de la bandelette,
- une platine rotative selon un axe de platine (AP), ladite platine rotative (6) portant une pluralité de galets rotatifs (7) d'axes parallèles à l'axe de platine, lesdits galets étant répartis sur un cercle (61) sensiblement concentrique à l'axe de platine, lesdits galets étant aptes à prendre appui sur une deuxième face de la bandelette,
- des moyens de guidage (9, 10) de la bandelette de renforcement plate entrant dans le dispositif,
- des moyens de synchronisation de la rotation de la platine rotative et de l'avancement du transporteur continu,
le circuit fermé comportant une portion d'interférence (PI) dans laquelle les moyens de synchronisation permettent aux doigts et aux galets de se déplacer selon des mouvements de rotation dans un plan commun perpendiculaire à l'axe de platine, les doigts et les galets étant intercalés dans ladite portion d'interférence de manière à imposer à la bandelette des ondes s'étendant dans ledit plan commun.

2. Installation selon la revendication 1 dans laquelle le transporteur continu est une chaîne (41) guidée par un pignon d'interférence (412) dans la portion d'interférence (PI) du circuit fermé.

3. Installation selon la revendication 2 dans laquelle les doigts (5) sont portés par les axes (413) des maillons de la chaîne.

4. Installation selon l'une des revendications 1 à 3 dans laquelle le dispositif comprend en outre un dérive-bandelette statique positionné dans la portion d'interférence (PI) pour pouvoir dériver la bandelette des doigts (5), de préférence au moins un quart de tour après le début de la portion d'interférence.

5. Installation selon l'une des revendications 1 à 4 dans laquelle le dispositif comprend en outre des moyens de rouletage (30,31) de la bandelette ondulée.

6. Installation selon l'une des revendications 1 à 5 dans laquelle le dispositif comprend en outre un cabestan motorisé (100) apte à contrôler son alimentation en bandelette plate.

7. Procédé de fabrication d'un pneumatique réalisé par l'installation selon l'une des revendications 1 à 6, ledit procédé comprenant successivement des étapes consistant à :
- transformer en continu une bandelette de renforcement plate (20) en une bandelette de renforcement ondulée (21),
- presser un à un les sommets (211) des ondes de la bandelette ondulée sur la surface (501) d'une ébauche de pneumatique (50) entrainée en rotation par un tambour (3) autour d'un axe de tambour (32),
- enrouler la bandelette ondulée sur l'ébauche de pneumatique,
dans lequel la bandelette de renforcement plate est transformée en bandelette ondulée à proximité immédiate du tambour, les ondes de la bandelette ondulée et le mouvement d'approche des sommets des ondes vers la surface de l'ébauche s'étendent dans un plan sensiblement perpendiculaire à l'axe de tambour.

8. Procédé de fabrication d'un pneumatique selon la revendication 7 dans lequel on enroule la bandelette ondulée en hélice sur l'ébauche de pneumatique afin de constituer en une pluralité de tours une armature de frettage du sommet du pneumatique, la bandelette ondulée présentant une sur-longueur donnée permettant la conformation de l'ébauche.

9. Procédé de fabrication d'un pneumatique selon la revendication 7 ou la revendication 8 comprenant en outre une étape de rouletage consistant à rabattre en continu les ondes de la bandelette ondulée au cours de l'enroulement de la bandelette sur l'ébauche, le mouvement de rabattage des ondes vers la surface de l'ébauche s'effectuant dans un plan sensiblement perpendiculaire à l'axe de tambour.

10. Procédé selon l'une des revendications 7 à 9 dans lequel on fait varier la hauteur des ondes au cours de l'enroulement.

## Patentansprüche

1. Anlage (2) zur Herstellung eines Reifens, wobei die Anlage eine um eine Trommelachse (32) rotierende Trommel (3) umfasst, wobei die Trommel geeignet ist, einen Reifenrohling zu tragen, wobei die Trommel gegenüber einer Vorrichtung (1) angeordnet ist, die geeignet ist zum:
- kontinuierlichen Umformen eines flachen Verstärkungsstreifens (20) in einen gewellten Verstärkungsstreifen (21),
- Pressen der Scheitel der Wellen des gewellten Streifens nacheinander auf die Oberfläche des von der Trommel drehend angetriebenen Reifenrohlings (3),
wobei die Anlage **dadurch gekennzeichnet ist, dass** die Vorrichtung (1) umfasst:
- einen Stetigförderer (4), der geeignet ist, mehrere Finger (5) entlang eines geschlossenen Kreislaufs zu führen, wobei die Finger geeignet sind, auf einer ersten Seite des Streifens zur Anlage zu kommen,
- eine Platte, die um eine Plattenachse (AP) drehbar ist, wobei die drehbare Platte (6) mehrere drehbare Rollen (7) mit Achsen, die parallel zu der Plattenachse sind, aufweist, wobei die Rollen auf einem Kreis (61) verteilt sind, der im Wesentlichen konzentrisch zu der Plattenachse ist, wobei die Rollen geeignet sind, auf einer zweiten Seite des Streifens zur Anlage zu kommen,
- Mittel zur Führung (9, 10) des flachen Verstärkungsstreifens, der in die Vorrichtung eintritt,
- Mittel zur Synchronisation der Rotation der drehbaren Platte und des Vorschubs des Stetigförderers,
wobei der geschlossene Kreislauf einen Interferenzabschnitt (PI) aufweist, in welchem die Mittel zur Synchronisation den Fingern und den Rollen ermöglichen, sich gemäß Drehbewegungen in einer gemeinsamen Ebene zu bewegen, die zu der Plattenachse senkrecht ist, wobei die Finger und die Rollen in dem Interferenzabschnitt derart eingebaut sind, dass sie dem Streifen Wellen aufzwingen, die sich in der gemeinsamen Ebene erstrecken.

2. Anlage nach Anspruch 1, wobei der Stetigförderer eine Kette (41) ist, die von einem Interferenzritzel (412) in dem Interferenzabschnitt (PI) des geschlossenen Kreislaufs geführt wird.

3. Anlage nach Anspruch 2, wobei die Finger (5) von den Achsen (413) der Glieder der Kette getragen werden.

4. Anlage nach einem der Ansprüche 1 bis 3, wobei die Vorrichtung außerdem einen statischen Streifenablenker umfasst, der in dem Interferenzabschnitt (PI) positioniert ist, um den Streifen vorzugsweise mindestens eine Viertelumdrehung nach dem Beginn des Interferenzabschnitts von den Fingern (5) ablenken zu können.

5. Anlage nach einem der Ansprüche 1 bis 4, wobei die Vorrichtung außerdem Mittel zum Aufwalzen (30, 31) des gewellten Streifens umfasst.

6. Anlage nach einem der Ansprüche 1 bis 5, wobei die Vorrichtung außerdem eine motorisierte Winde (100) umfasst, die geeignet ist, die Zuführung des flachen Streifens zu ihr zu steuern.

7. Verfahren zur Herstellung eines Reifens, das von der Anlage nach einem der Ansprüche 1 bis 6 durchgeführt wird, wobei das Verfahren nacheinander die folgenden Schritte umfasst:
- kontinuierliches Umformen eines flachen Verstärkungsstreifens (20) in einen gewellten Verstärkungsstreifen (21),
- Pressen der Scheitel (211) der Wellen des gewellten Streifens nacheinander auf die Oberfläche (501) eines Reifenrohlings (50), der von einer Trommel (3) um eine Trommelachse (32) drehend angetrieben wird,
- Aufwickeln des gewellten Streifens auf den Reifenrohling,
wobei der flache Verstärkungsstreifen in unmittelbarer Nähe der Trommel in einen gewellten Streifen umgeformt wird, wobei die Wellen des gewellten Streifens und die Annäherungsbewegung der Scheitel der Wellen an die Oberfläche des Rohlings sich in einer Ebene erstrecken, die im Wesentlichen senkrecht zur Trommelachse ist.

8. Verfahren zur Herstellung eines Reifens nach Anspruch 7, wobei der gewellte Streifen spiralförmig auf den Reifenrohling aufgewickelt wird, um in mehreren Wicklungen eine Versteifungsbewehrung des Scheitels des Reifens zu bilden, wobei der gewellte Streifen eine gegebene Überlänge aufweist, welche die Formgebung des Rohlings ermöglicht.

9. Verfahren zur Herstellung eines Reifens nach Anspruch 7 oder Anspruch 8, welches außerdem einen Schritt des Aufwalzens umfasst, der darin besteht, die Wellen des gewellten Streifens während des Aufwickelns des Streifens auf den Rohling kontinuierlich umzuschlagen, wobei die Bewegung des Umschlagens der Wellen in Richtung der Oberfläche des Rohlings in einer Ebene erfolgt, die im Wesentlichen senkrecht zur Trommelachse ist.

10. Verfahren nach einem der Ansprüche 7 bis 9, wobei die Höhe der Wellen während des Aufwickelns geändert wird.

## Claims

1. Installation (2) for the manufacture of a tire, said installation comprising a rotary drum (3) that rotates about a drum axis (32), said drum being able to carry a tyre blank, said drum being placed next to a device (1) that is able to:
- continuously convert a flat reinforcing strip (20) into an undulating reinforcing strip (21),
- press the peaks of the waves of the undulating strip one by one onto the surface of the tyre blank (3) that is driven in rotation by the drum,
the installation being **characterized in that** the device (1) comprises:
- a continuous transporter (4) that is able to guide a plurality of fingers (5) along a closed circuit, said fingers being able to bear against a first face of the strip,
- a rotary support plate that rotates about a support plate axis (AP), said rotary support plate (6) bearing a plurality of rotary rollers (7) having axes parallel to the support plate axis, said rollers being distributed in a circle (61) substantially concentric with the support plate axis, said rollers being able to bear against a second face of the strip,
- guide means (9, 10) for guiding the flat reinforcing strip entering the device,
- means for synchronizing the rotation of the rotary support plate and the forward motion of the continuous transporter,
the closed circuit having an intersecting portion (PI) in which the synchronizing means allow the fingers and the rollers to move in rotational movements in a common plane perpendicular to the support plate axis, the fingers and the rollers being interposed in said intersecting portion so as to impose waves on the strip that extend in said common plane.

2. Installation according to claim 1, wherein the continuous transporter is a chain (41) guided by an intersecting sprocket (412) in the intersecting portion (PI) of the closed circuit.

3. Installation according to claim 2, wherein the fingers (5) are carried by the pins (413) of the links of the chain.

4. Installation according to one of claims 1 to 3, wherein the device also comprises a static strip diverter positioned in the intersecting portion (PI) in order to be able to divert the strip from the fingers (5), preferably at least a quarter turn after the start of the intersecting portion.

5. Installation according to one of claims 1 to 4, wherein the device also comprises stitching means (30, 31) for stitching the undulating strip.

6. Installation according to one of claims 1 to 5, wherein the device also comprises a motorized winch (100) that is able to control the supply thereof with flat strip.

7. Method for manufacturing a tyre effected by the installation according to one of claims 1 to 6, said method successively comprising the steps of:
- continuously converting a flat reinforcing strip (20) into an undulating reinforcing strip (21),
- pressing the peaks (211) of the waves of the undulating strip one by one onto the surface (501) of a tyre blank (50) that is driven in rotation by a drum (3) about a drum axis (32),
- winding the undulating strip onto the tyre blank,
wherein the flat reinforcing strip is converted into an undulating strip in the immediate vicinity of the drum, the waves of the undulating strip and the movement of the wave peaks towards the surface of the blank extending in a plane substantially perpendicular to the drum axis.

8. Method for manufacturing a tyre according to claim 7, wherein the undulating strip is wound helically onto the tyre blank so as to form, in a plurality of turns, a hoop reinforcement of the crown of the tyre, the undulating strip having a given overlength allowing the blank to be shaped.

9. Method for manufacturing a tyre according to claim 7 or claim 8, also comprising a step of stitching that consists in continuously folding down the waves of the undulating strip while the strip is being wound onto the blank, the movement of folding the waves down towards the surface of the blank being carried out in a plane substantially perpendicular to the drum axis.

10. Method according to one of claims 7 to 9, wherein the height of the waves is varied during winding.
